# DEMANDE DE BREVET EUROPEEN

(11) **EP 4 378 802 A1**
(43) Date de publication de la demande: **05.06.2024**
(21) Numéro de dépôt: 23206437.8
(22) Date de dépôt: 27.10.2023
(51) Int. Cl.: B62D 25/20, B60K 1/04, B60L 50/64, B60L 50/60, B60L 53/80, B62D 25/24

(54) **VEHICULE ELECTRIQUE QUI COMPORTE UNE BATTERIE DE TRACTION AMOVIBLE PERMETTANT UN RETRAIT ET UN POSITIONNEMENT SIMPLIFIE**

(30) Priorité: 30.11.2022 FR 2212557
(71) Demandeur: Stellantis Auto SAS, 78300 Poissy (FR)
(72) Inventeur: GALIDIE, STEPHAN, 78460 CHEVREUSE (FR); GOHIER, GAEL, 91190 GIF SUR YVETTE (FR); TIXIER, JULIEN, 78460 CHEVREUSE (FR); BRUCAMP, GABRIEL, 78210 SAINT CYR L'ECOLE (FR); BOURIAUD, DAVID, 92370 CHAVILLE (FR)

(57) **Abrégé**

L'invention concerne un véhicule (1) qui comporte une batterie de traction (3), un moteur électrique de traction et au moins un logement (2), ledit logement (2) étant adapté pour recevoir ladite batterie de traction (3) et comporte un connecteur (21) adapté pour être relié à un connecteur (31) de la batterie de traction (3) pour alimenter en courant électrique le moteur de traction, ledit logement (2) comportant une ouverture, ladite ouverture étant adaptée pour permettre un retrait de la batterie de traction (3), ledit logement (2) comportant un couvercle (4) adaptée pour fermer ladite ouverture et des moyens de verrouillage pour bloquer ledit couvercle (4) dans une position fermée lors de l'utilisation du véhicule (1), tel que le logement (2) comporte des moyens de maintien temporaire (5) permettant de maintenir temporairement le couvercle (4) dans ladite position fermée le temps d'activer lesdits moyens de verrouillage.

## Description

La présente invention concerne un véhicule qui comporte une batterie de traction et un moteur électrique de traction.

Elle concerne plus précisément un tel véhicule qui comporte un logement adapté pour recevoir ladite batterie de traction, avec le logement qui comporte un connecteur adapté pour être relié à un connecteur de la batterie de traction pour alimenter en courant électrique le moteur de traction, le logement comportant une ouverture, ladite ouverture étant adaptée pour permettre un retrait et une mise ne place simplifié de la batterie de traction, ledit logement comportant un couvercle adaptée pour fermer ladite ouverture et des moyens de verrouillage pour bloquer ledit couvercle dans une position fermée lors de l'utilisation du véhicule.

Il est connu d'avoir un véhicule du type électrique qui comporte une batterie de traction qui soit amovible en étant positionné dans un logement qui comporte un connecteur adapté pour être relié à un connecteur de la batterie de traction pour alimenter en courant électrique le moteur de traction.

Une telle batterie de traction doit être protégé dans son logement par un couvercle qui doit être facilement manipulable lors de retrait ou de la mise en place de la batterie dans son logement, tout en étant verrouillé lors de l'utilisation du véhicule.

L'utilisation des moyens de verrouillage du couvercle comme seul moyen de maintien lors de la manipulation des batteries et du couvercle, rend la manoeuvre compliquée et implique que ces moyens de verrouillage soient accessibles depuis l'extérieur du véhicule ce qui augmente les risques de vol de la batterie de traction.

Le dispositif selon l'invention permet de remédier à ces inconvénients.

Il comporte en effet, selon l'invention, un véhicule qui comporte une batterie de traction, un moteur électrique de traction et au moins un logement, ledit logement étant adapté pour loger ladite batterie de traction et comporte un connecteur adapté pour être relié à un connecteur de la batterie de traction pour alimenter en courant électrique le moteur de traction, ledit logement comportant une ouverture, ladite ouverture étant adaptée pour permettre un retrait de la batterie de traction, ledit logement comportant un couvercle et des moyens de verrouillage pour bloquer ledit couvercle dans une position fermée lors de l'utilisation du véhicule, tel que le logement comporte des moyens de maintien temporaire qui permettent de maintenir temporairement le couvercle dans ladite position fermée le temps d'activer lesdits moyens de verrouillage.

Selon une première caractéristique de l'invention, ladite ouverture du logement est débouchante vers l'extérieur du véhicule, ledit logement étant adapté pour permettre un retrait de la batterie de traction depuis l'extérieur du véhicule.

Selon une deuxième caractéristique de l'invention, ladite ouverture du logement est débouchante sur un côté du véhicule, l'accès à l'habitacle dudit véhicule se faisant au-dessus dudit logement.

Selon un premier mode réalisation de l'invention, une porte latérale du véhicule est adaptée pour être positionnée au-dessus du couvercle du logement, permettant un retrait de la batterie de traction depuis l'extérieur du véhicule quel que soit la position de ladite porte latérale.

Selon un second mode réalisation de l'invention, une porte latérale du véhicule est adaptée pour recouvrir au moins partiellement le couvercle du logement lorsque ladite porte latérale est dans une première position dite fermée et pour libérer l'accès au couvercle dudit logement lorsque ladite porte latérale est dans une seconde position dite ouverte permettant un retrait de la batterie de traction depuis l'extérieur du véhicule.

Selon une troisième caractéristique de l'invention, les moyens de maintien temporaires comportent une première partie positionnée le long d'une des bordures de l'ouverture du logement et une seconde partie solidaire du couvercle, la première partie des moyens de maintien temporaires étant adaptée pour être aimantée à la seconde partie desdits moyens de maintien temporaires.

Selon une quatrième caractéristique de l'invention, des premiers moyens de maintien temporaires sont positionnés le long d'un premier bord du logement et du couvercle et des seconds moyens de maintien temporaires sont positionnés le long du bord opposé dudit logement et du couvercle.

Selon une cinquième caractéristique de l'invention, le couvercle comporte au moins un évidement adapté pour, dans une position ouverte du logement, former un support pour ladite batterie de traction et en ce que le connecteur du logement est adapté pour se connecter au connecteur de la batterie de traction lors de la fermeture du couvercle par basculement de la batterie de traction dans ledit logement.

Selon une sixième caractéristique de l'invention, la batterie de traction constitue une première batterie de traction, ledit logement étant adapté pour recevoir une seconde batterie de traction adaptée pour alimenter aussi le moteur de traction, l'ouverture du logement étant aussi adaptée pour permettre un retrait simultanément de la première et de la seconde des deux batteries de traction.

Les dessins annexés illustrent l'invention :
[Fig. 1] représente une vue extérieure d'un premier mode de réalisation d'un véhicule selon l'invention qui comporte un couvercle d'un logement des batteries de traction qui est représenté fermé.
[Fig. 2] représente une vue extérieure du premier mode de réalisation du véhicule selon l'invention avec le couvercle du logement des batteries de traction qui est représenté ouvert, les batteries de traction étant représentées hors du logement.
[Fig. 3] représente une vue extérieure d'un second mode de réalisation d'un véhicule selon l'invention qui comporte un couvercle d'un logement d'une batterie de traction qui est représenté de fermé.
[Fig. 4] représente une vue extérieure du second mode de réalisation du véhicule selon l'invention avec le couvercle du logement des batteries de traction qui est représenté ouvert, les batteries de traction étant représentées hors du logement.

En référence aux dessins 1 et 2 est représenté un véhicule 1 à propulsion électrique qui comporte un moteur électrique de traction qui est alimenté en électricité par un ensemble de batteries de traction, avec une première partie de ces batteries de traction qui constitue une batterie de traction principale qui est positionnée dans le véhicule 1 de manière difficilement amovible et une seconde partie 3 de ces batteries de traction qui est constitué par deux batteries de traction 3 et qui est positionnée dans au moins un logement 2 qui est débouchant vers l'extérieur du véhicule 1, permettant un retrait de ces deux batteries de traction 3 depuis l'extérieur du véhicule 1.

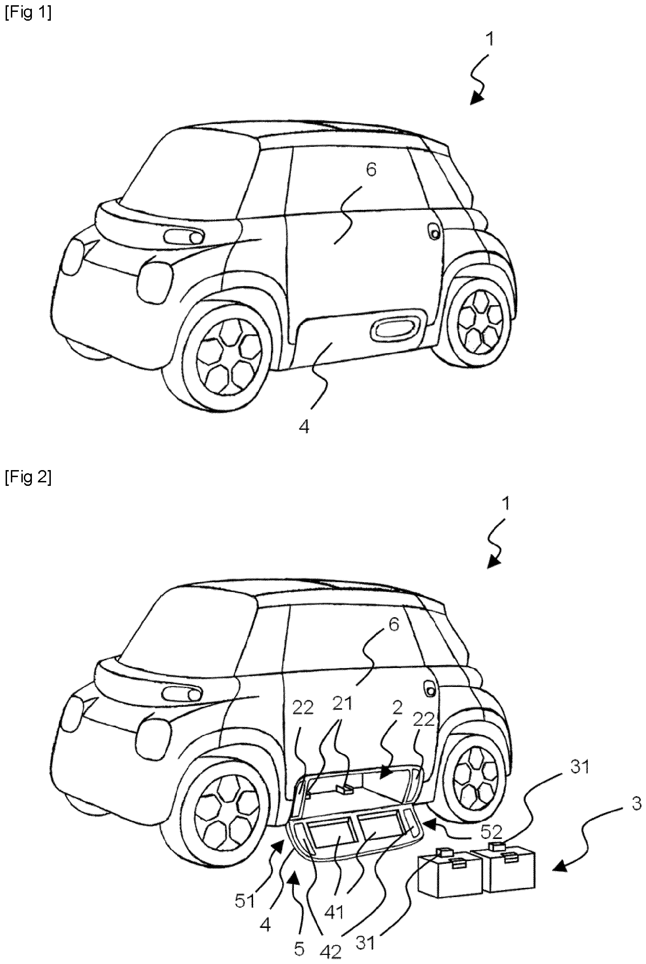

Est représenté sur la figure 2, les deux batteries de traction 3 qui sont adaptées pour être positionnées de manière amovible dans le logement 2.

Le logement 2 comporte deux connecteurs 21 et chaque batterie de traction 3 comporte un connecteur 31 adapté pour être automatiquement connecté à un des deux connecteurs 21 du logement 2 lors du positionnement de ladite batterie de traction 3 dans le logement 2, permettant d'alimenter le moteur électrique de traction en courant électrique.

Le logement 2 comporte un couvercle 4 basculant et des moyens de verrouillage (non représentés) pour bloquer ledit couvercle 4 dans une position fermée permettant de bloquer les deux batteries de traction 3 dans le logement 2 lors de l'utilisation du véhicule 1, tel que représenté sur la figure 1.

Le logement 2 comporte des moyens de maintien temporaire 5 permettant de maintenir temporairement le couvercle 4 dans la position fermée le temps d'activer les moyens de verrouillage.

Le couvercle 4 participe à la mise en place des deux batteries de traction 3, faisant que les moyens de maintien temporaire 5 doivent avoir une tenue suffisante pour ne pas s'ouvrir avant que le conducteur ne soit positionné face au couvercle 4 pour accompagner son basculement.

Le couvercle 4 comporte deux évidements 41 pour positionner les deux batteries de traction 3, permettant lors de la fermeture du couvercle 4 de basculer les deux batteries de traction 3 dans le logement 2, positionnant en connecteurs 21 du logement 2 en contact avec les connecteurs 31 des deux batteries de traction 3.

Suivant l'architecture retenue, les deux batteries de traction 3 peuvent soit :
- constituer les deux seules batteries de traction 3 présentent dans le véhicule 1 ; ou
- constituer deux batteries de traction 3 qui viennent en complément de la batterie de traction principale, qui est difficilement amovible.

Dans le cas où les deux batteries de traction 3 qui viennent en complément de la batterie de traction principale, les deux batteries de traction 3 permettent alors d'accroitre l'autonomie suivant les besoins de mobilité ou peuvent servir à recharger la batterie de traction principale dans le cas où le véhicule 1 n'a pas accès à une prise de courant électrique.

Dans le premier mode de réalisation tel que représenté aux figures 1 et 2, une porte latérale 6 d'accès à l'habitacle du véhicule 1 est positionnée au-dessus du couvercle 4 du logement 2, permettant un retrait des deux batteries de traction 3 depuis l'extérieur du véhicule 1 quel que soit la position ouverte ou fermée de la porte latérale 6.

Des moyens de verrouillage sont nécessaire pour bloquer le couvercle 4 du logement 2 lors du fonctionnement du véhicule 1.

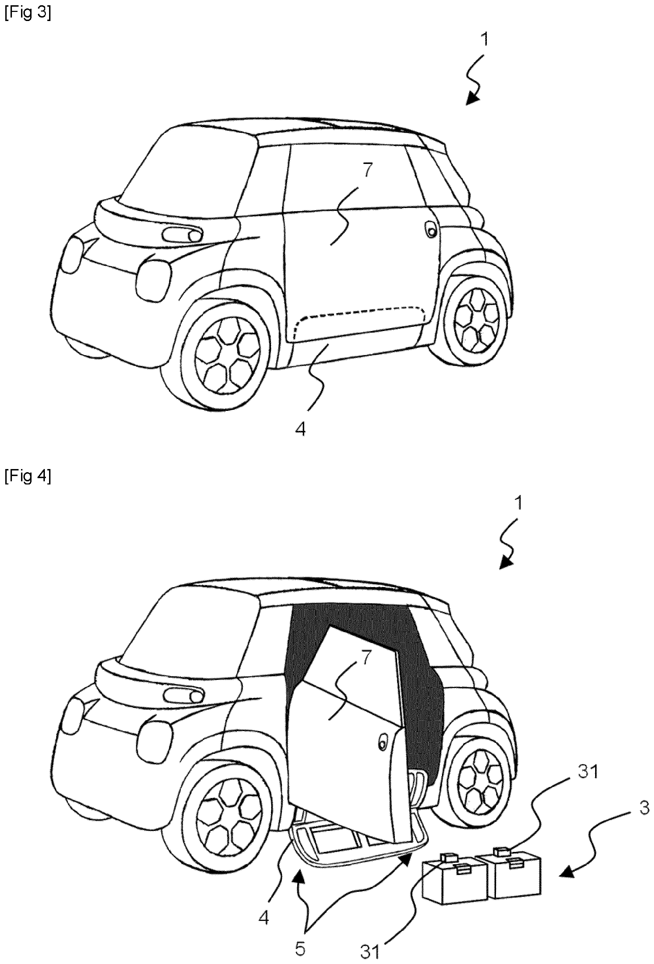

Dans le second mode de réalisation tel que représenté aux figures 3 et 4, une porte latérale 7 d'accès à l'habitacle du véhicule 1 est positionnée de telle sorte à recouvrir au moins une partie supérieure du couvercle 4 du logement 2, faisant que la porte latérale 7 peut faire office de moyens de verrouillage, interdisant l'accès aux deux batteries de traction 3 depuis l'extérieur du véhicule 1 tant que le porte latérale 7 est fermée.

Dans les deux modes de réalisation, les moyens de maintien temporaire 5 restent les mêmes et sont constitués de deux ensembles de deux plaques aimantées, une première plaque aimantée 22 qui est positionnée le long d'un bord latéral du logement 2 et une seconde plaque aimantée 42 qui est positionnée, en regard de la première plaque aimantée 22, sur le couvercle 4.

Comme représenté dans ces figures, un premier ensemble 51 des moyens de maintien temporaire 5 est positionné le long d'un premier bord latéral du logement 2 et du couvercle 4, un second ensemble 52 des moyens de maintien temporaire 5 étant positionné le long du second bord latéral opposé du logement 2 et du couvercle 4.

La dimension de chacune des plaques aimantées doit être adaptée au poids des deux batteries de traction 3, pour s'assurer que le couvercle 4 ne bascule pas en position ouverte de manière involontaire avant l'activation des moyens de verrouillage où au moment de la désactivation des moyens de verrouillage.

## Revendications

1. Véhicule (1) comportant une batterie de traction (3), un moteur électrique de traction et au moins un logement (2), ledit logement (2) étant adapté pour recevoir ladite batterie de traction (3) et comporte un connecteur (21) adapté pour être relié à un connecteur (31) de la batterie de traction (3) pour alimenter en courant électrique le moteur de traction, ledit logement (2) comportant une ouverture, ladite ouverture étant adaptée pour permettre un retrait de la batterie de traction (3), ledit logement (2) comportant un couvercle (4) adaptée pour fermer ladite ouverture et des moyens de verrouillage pour bloquer ledit couvercle (4) dans une position fermée lors de l'utilisation du véhicule (1), **caractérisé en ce que** le logement (2) comporte des moyens de maintien temporaire (5) permettant de maintenir temporairement le couvercle (4) dans ladite position fermée le temps d'activer lesdits moyens de verrouillage.

2. Véhicule (1) selon la revendication 1, **caractérisé en ce que** ladite ouverture du logement (2) est débouchante vers l'extérieur du véhicule (1), ledit logement (2) étant adapté pour permettre un retrait de la batterie de traction (3) depuis l'extérieur du véhicule (1).

3. Véhicule (1) selon la revendication 2, **caractérisé en ce que** ladite ouverture du logement (2) est débouchante sur un côté du véhicule (1), l'accès à l'habitacle dudit véhicule (1) se faisant au-dessus dudit logement (2).

4. Véhicule (1) selon la revendication 3, **caractérisé en ce qu'**une porte latérale (6) dudit véhicule (1) est adaptée pour être positionnée au-dessus du couvercle (4) dudit logement (2), permettant un retrait de la batterie de traction (3) depuis l'extérieur du véhicule (1) quel que soit la position de ladite porte latérale (6).

5. Véhicule (1) selon la revendication 3, **caractérisé en ce qu'**une porte latérale (7) dudit véhicule (1) est adaptée pour recouvrir au moins partiellement le couvercle (4) dudit logement (2) lorsque ladite porte latérale (7) est dans une première position dite fermée et pour libérer l'accès au couvercle (4) dudit logement (2) lorsque ladite porte latérale (7) est dans une seconde position dite ouverte permettant un retrait de la batterie de traction (3) depuis l'extérieur du véhicule (1).

6. Véhicule (1) selon l'une quelconque des revendications précédentes, **caractérisé en ce que** les moyens de maintien temporaires (5) comportent une première partie (22) positionnée le long d'une des bordures de l'ouverture du logement (2) et une seconde partie (42) solidaire du couvercle (4).

7. Véhicule (1) selon la revendication 6, **caractérisé en ce que** la première partie (22) des moyens de maintien temporaires (5) est adaptée pour être aimantée à la seconde partie (42) desdits moyens de maintien temporaires (5).

8. Véhicule (1) selon la revendication 6 ou 7, **caractérisé en ce que** des premiers moyens de maintien temporaires (51) sont positionnés le long d'un premier bord du logement (2) et du couvercle (4), des seconds moyens de maintien temporaires (52) étant positionnés le long du bord opposé dudit logement (2) et du couvercle (4).

9. Véhicule (1) selon l'une quelconque des revendications précédentes, **caractérisé en ce que**, le couvercle (4) comporte au moins un évidement (41) adapté pour, dans une position ouverte du logement (2), former un support pour ladite batterie de traction (3) et **en ce que** le connecteur (21) du logement (2) est adapté pour se connecter au connecteur (31) de la batterie de traction (3) lors de la fermeture du couvercle (4) par basculement de la batterie de traction (3) dans ledit logement (2).

10. Véhicule (1) selon l'une quelconque des revendications précédentes, **caractérisé en ce que** la batterie de traction (3) constitue une première batterie de traction (3), ledit logement (2) étant adapté pour recevoir une seconde batterie de traction (3) adaptée pour alimenter aussi le moteur de traction, l'ouverture du logement (2) étant aussi adaptée pour permettre un retrait simultanément de la première et de la seconde des deux batteries de traction (3).
